# EUROPÄISCHE PATENTSCHRIFT

(11) **EP 1 577 986 B1**
(45) Veröffentlichungstag und Bekanntmachung des Hinweises auf die Patenterteilung: **25.06.2014**
(21) Anmeldenummer: 05405213.9
(22) Anmeldetag: 01.03.2005
(51) Int. Cl.: H01R 13/639, H01R 13/46, G02B 6/38

(54) **Sicherungsvorrichtung für Steckverbindung**
Security device for connector
Dispositif de sécurité pour connecteur

(30) Priorität: 17.03.2004 CH 4572004
(43) Veröffentlichungstag der Anmeldung: 21.09.2005
(73) Patentinhaber: Reichle & De-Massari AG, 8622 Wetzikon (CH)
(72) Erfinder: Andres, Hans, 8340 Hinwil (CH); Zollinger, Rolf, 8630 Rüti (CH)
(74) Vertreter: Daub, Thomas

(56) Entgegenhaltungen:
- DE-A- 4 419 025
- DE-A- 10 113 529
- US-A- 5 951 316
- US-A1- 2002 098 731
- US-A1- 2002 187 672

## Beschreibung

Die Erfindung betrifft Steckersysteme für elektrische sowie optische Informationsübertragungkabel. Sie betrifft insbesondere eine Sicherungsvorrichtung für eine Steckverbindung mit Steckbuchse und Stecker. Ferner betrifft sie ein Steckverbindungssystem.

Sicherungsvorrichtungen für eine Steckverbindung dienen dem Verhindern eines unabsichtlichen und je nach dem auch eines unbefugten Abziehens des Steckers aus der Buchse.

Sicherungsvorrichtungen dieser Art sind beispielsweise aus der Schrift WO02/07589 bekannt. Das dort beschriebene System beruht auf dem an sich bekannten Zusammenwirken einer Entriegelungslasche des Steckers mit einer Haltenase in der Buchse. Die Entriegelungslasche wird durch das in der WO02/07589 gezeigte System vollständig durch die Sicherungsvorrichtung abgedeckt und kann nur durch einen seitlich in die Sicherungsvorrichtung einzuführenden Schlüssel betätigt werden. Dieses System bietet an sich einen guten Schutz. Es weist aber Nachteile auf. Erstens sind Laschen als abstehende, verhältnismässig lange Teile in gewissen Umgebungen grundsätzlich eher ungeeignet, da sie bei grossen mechanischen Belastungen abgeschert oder sonstwie beschädigt werden können. Zweitens ist die Einsatzfähigkeit der Sicherungsvorrichtung beschränkt auf Klinkenstecker, welche eine solche Lasche vorsehen oder mindestens erlauben.

Ein weiterer Problemkreis betrifft die Farbkodierung. Es ist seit längerem üblich, Gehäuse von Stecker und Buchsen in verschiedenen Farben auszugestalten. Der Benutzer ist angewiesen, Stecker nur in Buchsen mit der passenden Farbe einzuschieben. Nachteilig ist, dass sowohl Steckergehäuse als auch Buchsen in einer Reihe von verschiedenen Farben zur Verfügung gestellt werden müssen. Das erhöht einerseits die Produktionskosten und führt andererseits dazu, dass ein Installateur immer Steckergehäuse und Buchsen mit einer Reihe von verschiedenen Farben verfügbar haben muss.

US 2002/0098731 offenbart eine Sicherungsvorrichtung nach dem Oberbegriff des Anspruchs 1 und ein Steckverbindungssystem umfassend eine solche Sicherungsvorrichtung.

Es ist also eine Aufgabe der Erfindung, eine Sicherungsvorrichtung zur Verfügung zu stellen, welche Nachteile von entsprechenden Vorrichtungen aus dem Stand der Technik überwindet und welche insbesondere dafür geeignet ist, auch für Steckersysteme ohne Entriegelungslasche verwendet zu werden. Ausserdem ist eine Aufgabe der Erfindung, ein Steckersystem mit einer Kodierung zur Verfügung zu stellen, welche Nachteile von bestehenden Kodiersystemen überwindet.

Diese Aufgabe wird gelöst durch die Erfindung, wie sie in den Patentansprüchen definiert ist.

Die Sicherungsvorrichtung besitzt gemäss einem ersten Aspekt der Erfindung ein Gehäuse, welches beispielsweise Befestigungsmittel zum Einrasten in Befestigungslöcher einer Buchsen-Frontplatte aufweist. Im Innern des Gehäuses ist eine Riegelfeder mit einem Riegelelement vorhanden. Dieses ist so angeordnet, dass bei eingerastetem Stecker ein Ziehen des Steckers durch Anstehen eines Anschlags eines lateral vom Steckergehäuse vorstehenden Nockens oder anderen Elementes (bspw. einer Körperkante) am Riegelelement verhindert wird. Das Gehäuse weist eine Öffnung - beispielsweise ein Schlüsselloch - auf, in welche ein Werkzeug eingreifen und durch eine Auslenkung der Riegelfeder entgegen einer Federkraft das Riegelelement so verschieben kann, dass es einem Ziehen des Steckers nicht mehr entgegenwirkt.

Der Begriff "lateral" bezeichnet hier eine von der longitudinalen", also zur Steckerachse parallelen Richtung verschiedene Richtung, also beispielsweise irgend eine zur Steckerachse senkrechte Richtung.

Die erfindungsgemässe Sicherungsvorrichtung kann bei jedem Steckersystem angewandt werden, welches beispielsweise Stecker mit einem lateral vorstehenden Nocken erlaubt. Dies beinhaltet insbesondere sowohl Stecker für Anwendungen im Heim- und Bürobereich als auch Stecker für industrielle Anwendungen. Besonders vorteilhaft ist natürlich, wenn der lateral vorstehende Nocken sowieso schon für andere Zwecke vorhanden ist. Beispielsweise sind Systeme mit Kodiernocken für die mechanische Kodierung bekannt. Die erfindungsgemässe Sicherungsvorrichtung kann so ausgestaltet sein, dass der lateral vorstehende Nocken ein solcher an sich bekannter Kodiernocken ist.

Die Sicherungsvorrichtung ist vorzugsweise so ausgestaltet, dass die Riegelfeder beim Einschieben des Steckers nicht aktiv betätigt werden muss, sondern vielmehr selbsttätig ausweicht. Dies kann bspw. dadurch bewerkstelligt werden, dass das Riegelelement eine in Steckrichtung ansteigende Rampenfläche aufweist, so dass beim Einschieben des Steckers die Riegelfeder durch Druck vom Nocken auf die Rampenfläche des Riegelelementes ausgelenkt wird und bei vollständig eingeschobenem Stecker hinter dem Nocken einrastet. Auch wirkungsähnliche Mittel sind denkbar, bspw. eine separat zum Riegelelement vorhandene Rampe für das Auslenken der Riegelfeder.

Als Werkzeug für das Auslenken der Riegelfeder kann bspw. bei entsprechender Ausgestaltung der Sicherungsvorrichtung ein kleiner Schraubenzieher oder ein anderes übliches Werkzeug dienen. Besonders bevorzugt ist aber die Lösung mit einem als das Werkzeug dienenden Schlüssel, welcher in die dann als Schlüsselloch dienende Öffnung seitlich am Gehäuse einschiebbar ist, wobei die Riegelfeder durch eine Schwenkbewegung des Werkzeugs um eine zur Steckerachse senkrechte Schwenkachse auslenkbar ist. Ein Schlüsselbart des Schlüssels bewirkt diese Auslenkung durch eine mit der Riegelfeder zusammenwirkende Oberfläche. Zu diesem Zweck kann die Riegelfeder einen J-förmig oder U-förmig abgebogenen Endabschnitt besitzen, mit welchem der Schlüsselbart beim Auslenken zusammenwirkt. Die Sicherungsvorrichtung bietet durch ihre einfache Ausgestaltung die Möglichkeit, dass als Werkzeug ein an sich für andere Steckverbindungen (bspw. RJ-45, vgl. WO02/07589) schon verwendeter Schlüssel benutzt werden kann. Dies ist vorteilhaft, denn es ist im Interesse der Installateure, möglichst wenig verschiedene Werkzeuge zu benötigen.

Gemäss einer bevorzugten Ausführungsform ist die Öffnung - also das Schlüsselloch - so ausgeformt, dass es genau auf die Form des Schlüsselbartes abgestimmt ist. So können die Steckverbindungen nur von Personen gelöst werden, welche einen entsprechenden Schlüssel besitzen. Die erfindungsgemässe Sicherungsvorrichtung bietet also die Möglichkeit, das Ziehen von Steckverbindungen autorisiertem Fachpersonal vorzubehalten.

Die Sicherungsvorrichtung kann noch einen am Gehäuse steckerseitig vorhandenen Kragen besitzen, welcher den eingesteckten Stecker umgibt und eine gegen aussen vorstehende Ausbuchtung aufweist, so dass sich eine umlaufende Nut bildet, in welche Einrastmittel eines Steckerschutzes einrastbar sind. So kann beispielsweise eine Abdichtung zwischen einem Steckerschutz und der Sicherungsvorrichtung erwirkt werden, so dass die ganze Steckerverbindung spritzwasserdicht.

Entsprechende bspw. balgartig ausgebildete Steckerschutzelemente sind an sich bekannt und bspw. in den Figuren 6, 7 und 8 der Schrift WO 03/012932 (mit dem Bezugszeichen 2 versehen) gezeichnet. In die umlaufende Nut kann, wenn sich kein Stecker in der Buchse befindet, auch eine Abdeckung eingerastet werden.

Ein Steckverbindersystem gemäss einem zweiten Aspekt der Erfindung besitzt eine Sicherungsvorrichtung zum Befestigen vor einer Steckerbuchse. Die Sicherungsvorrichtung kann in der vorstehend beschriebenen Art ausgestaltet sein. Ein Steckergehäuse und das Gehäuse der Sicherungsvorrichtung besitzen je eine Befestigungsstelle, bspw. eine Raststelle, an welcher ein Farbkodierungselement befestigbar, bspw. aufrastbar ist. Die Raststellen sind beispielsweise gleich ausgestaltet in dem Sinn, dass die Farbkodierungselemente sowohl auf die Raststelle des Steckergehäuses als auch auf die Raststelle der Sicherungsvorrichtung aufrastbar sind.

Es ist eine Erkenntnis der Erfindung, dass sich die im Vergleich zur Steckerbuchse gut sichtbare und im Vergleich zur Frontplatte einfach auswechselbare Sicherungsvorrichtung besonders gut für eine Farbkodierung eignet, dass es aber nicht notwendig ist, dass die ganze Sicherungsvorrichtung in mehreren Farben hergestellt wird. Ausserdem bietet das System mit befestigbaren Kodierungselementen auch die Möglichkeit zur Implementierung von einer zusätzlichen mechanischen Kodierung an Normsteckern.

Speziell geeignet sind die Sicherungsvorrichtung und das Steckverbindersystem im Zusammenhang mit Steckverbindungen gemäss dem sog. "Push-pull"-Prinzip, welches oft im Gegensatz zu Klinkensteckern oder Verbindungen nach dem Bajonett.- oder Schraubverschlussprinzip keine spezifischen Entriegelelemente vorsieht. Sicherungsvorrichtung und Steckverbindersystem eignen sich speziell auch für Steckverbindungen von optischen Informationsübertragungskabeln.

Im Folgenden werden Ausführungsformen der Erfindung anhand von Zeichnungen beschrieben. In den Zeichnungen zeigen:
- Fig. 1 eine Ansicht einer Frontplatte mit zwei Ports, wobei in bzw. an einer Buchsenöffnung eine Buchse und eine Sicherungsvorrichtung vorhanden sind, und wobei ein zweiteiliger optischer Stecker in die Buchse eingeführt ist,
- Fig. 2 eine Ansicht der Sicherungsvorrichtung mit einem als Werkzeug dienenden Schlüssel
- Fig. 3 eine Detailansicht der Sicherungsvorrichtung mit eingeschobenem Steckergehäuse und mit Schlüssel
- Fig. 4 eine Detailansicht, welche den Verriegelungs-/Betätigungsmechanismus illustriert
- Fig. 5 eine Explosionsdarstellung einer Sicherungsvorrichtung mit eingeschobenem Steckergehäuse und von Farbkodierungselementen
- Fig. 6 eine Ansicht der Sicherungsvorrichtung mit eingeschobenem Steckergehäuse, wobei die Farbkodierungselemente befestigt sind.
- Fig. 7 und 8 je eine Ansicht einer Frontplatte mit Sicherungsvorrichtung und Stecker, wobei ein Kodierungselement eine Struktur für eine mechanische Kodierung aufweist.

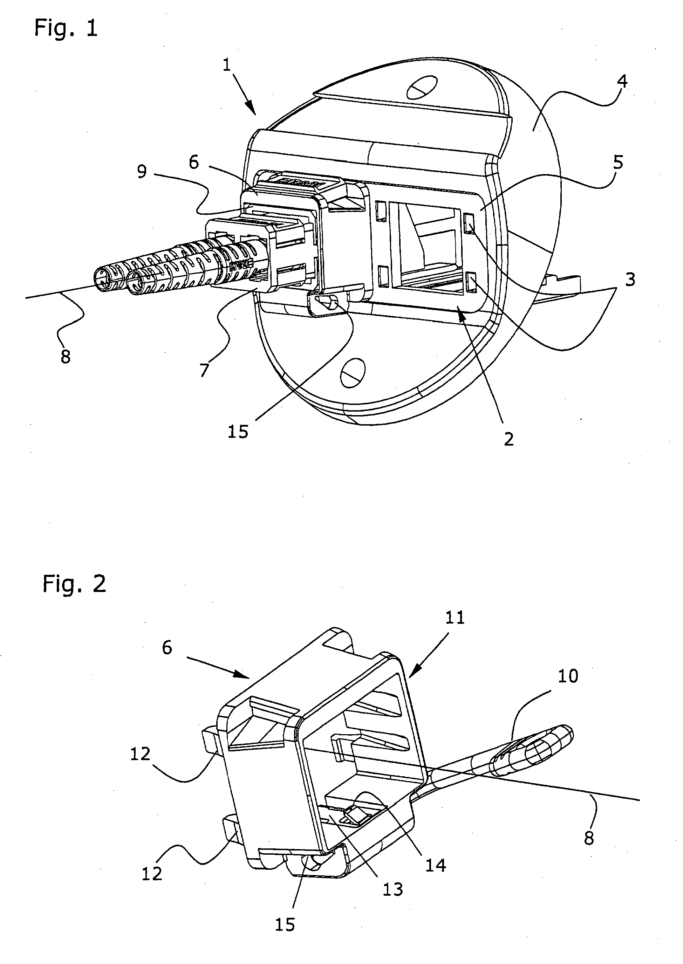

Die Frontplatte 1 gemäss **Figur 1** besitzt zwei Aufnahmestellen ("Ports") für Buchse, Sicherungsvorrichtung und Stecker. Aufnahmestellen beinhalten je eine Buchsenöffnung 2 sowie vier Befestigungslöcher 3. Im gezeichneten Ausführungsbeispiel ist die Frontplatte nicht einstückig sondern setzt sich aus einem äusseren Frontplattenmodul 4 und einer Aufnahmeplatte 5 mit den Aufnahmestellen zusammen.

In die in der Figur links angeordnete Aufnahmestelle sind eine Steckbuchse (auch ,Buchse genannt; in der Figur verdeckt), eine Sicherungsvorrichtung 6 und ein in die Buchse eingeführter Stecker 7 gezeichnet. Ebenfalls eingezeichnet ist eine Steckerachse 8, welche eine longitudinale Richtung definiert. Zwischen der Sicherungsvorrichtung und dem Stecker ist ein Zwischenteil 9 sichtbar, welches sich beispielsweise ins Innere der Buchse erstreckt.

Die Sicherungsvorrichtung ist auch in **Figur 2** dargestellt, wobei dort noch ein Schlüssel 10 gezeichnet ist. Die Sicherungsvorrichtung besitzt ein Gehäuse 11 mit Befestigungsmitteln 12 zum Einrasten in die Befestigungslöcher 3. Im Innern des Gehäuses angeordnet sind eine Riegelfeder 13 und ein Riegelelement 14, welches in der gezeichneten Ausführungsform einstückig mit der Riegelfeder ausgebildet ist. Das Gehäuse 11 besitzt mindestens ein Schlüsselloch 15 in welches ein Schlüssel 10 eingeführt werden kann. In der gezeichneten Ausführungsform sind zwei Schlüssellöcher 15 vorhanden.

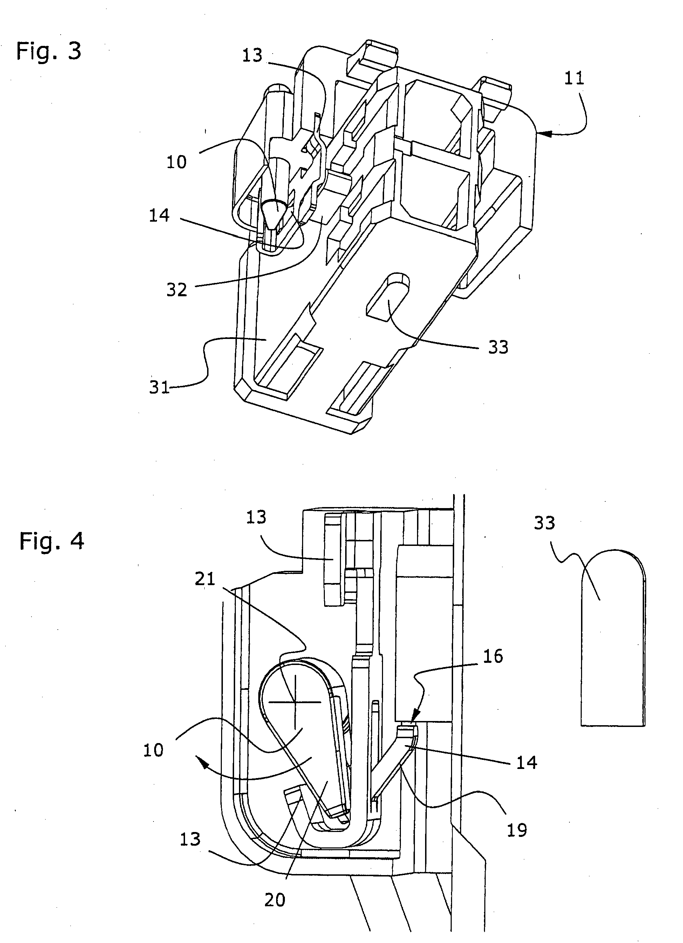

Die Funktion von Riegelfeder 13, Riegelelement 14 und Schlüssel 10 ist am besten sichtbar in den **Figuren 3 und 4.** Fig. 3 zeigt einen Teil des Gehäuses 11 sowie das Steckergehäuse 31 eines Normsteckers ohne Ferrulen und Kabel und einen Schlüssel 10. Der hier gezeichnete Stecker ist vom SC-RJ-Typ (gemäss der Normenfamilie EN 50377-6-x), welcher für die optische Informationsübertragung verwendet wird. Die Riegelfeder 13 ist plättchenartig ausgeformt, wobei das Riegelelement als aus der Plättchenebene heraus ragende steife Lasche ausgebildet ist. Sie ist an einem Ende im Gehäuse fixiert. Im eingerasteten Zustand des Steckers bildet eine Anschlagfläche 16 des Riegelelements einen Anschlag für einen Nocken 32 des Steckergehäuses 31 und verhindert so, dass der Stecker gezogen werden kann - in der in Fig. 3 und 4 gezeichneten Anordnung entspricht das Ziehen des Steckers einer Bewegung des Steckergehäuses nach unten. In der Figur ebenfalls sichtbar sind Führungsnocken 33 des Steckergehäuses 31.

Auf einer Seite ist die bspw. plättchenartig ausgebildete Riegelfeder im Gehäuse befestigt. Auf der anderen Seite kann sie ausgelenkt werden. Auf der auslenkbaren Seite besitzt die Riegelfeder einen im Querschnitt J-förmig ausgeformten Endabschnitt 18. Dieser bildet eine Mitnahmepartie für einen Bart 20 des Schlüssels 10. Alternativ zur plättchenartigen Ausformung der Riegelfeder ist auch eine Ausformung als Runddraht denkbar.

Zum Ziehen des Steckers wird der Schlüssel durch das Schlüsselloch eingeführt. Dabei kommt der Bart 20 des Schlüssels automatisch so zu liegen, dass eine Endpartie des Barts ins Innere des J-förmigen Abschnitts ragt. Durch Drehen des Schlüssels um eine Drehachse 21 wird die Feder ausgelenkt, was in Fig. 4 durch einen Pfeil dargestellt ist. Dadurch wird das Riegelelement 14 so verschoben, dass der Nocken 32 schliesslich an ihm vorbei bewegbar ist.

Das Riegelelement besitzt einen Oberflächenabschnitt, welcher eine in Steckrichtung ansteigende Rampenfläche 19 bildet, so dass beim Einschieben des Steckers - in Fig. 3 und 4 durch eine Bewegung des Steckergehäuses nach oben - die Riegelfeder durch Druck vom Nocken 32 auf die Rampenfläche 19 des Riegelelementes ausgelenkt wird und bei vollständig eingeschobenem Stecker hinter dem Nocken einrastet. Durch dieses optionale Merkmal wird erreicht, dass für das Einschieben des Steckers kein Werkzeug benötigt wird.

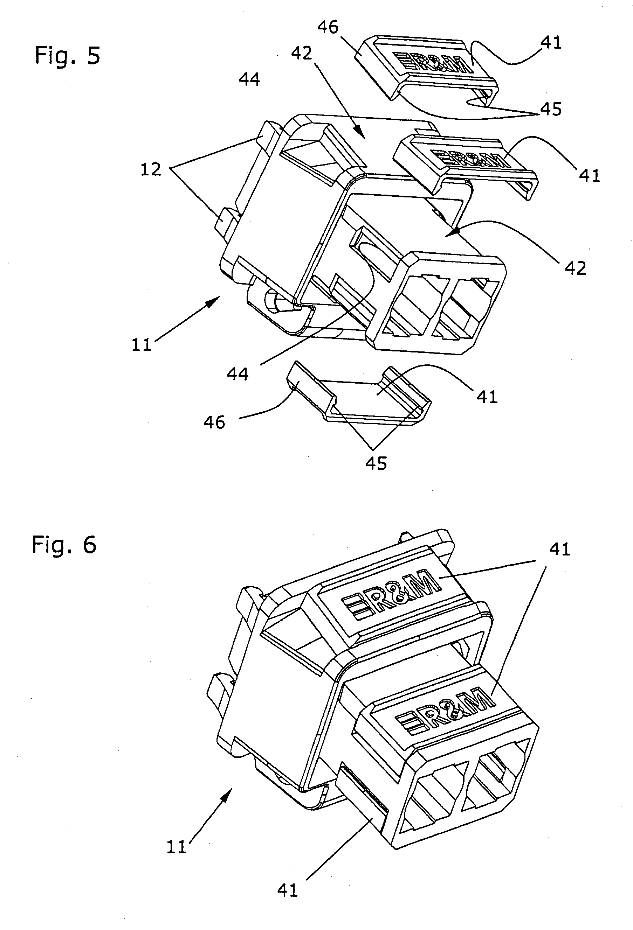

Die **Figuren 5 und 6** zeigen eine Sicherungsvorrichtung mit eingeschobenem Steckergehäuse, erneut am Beispiel einer SC-RJ-Normsteckverbindung, wobei Ferrulen und Kabel der Übersichtlichkeit halber nicht sichtbar sind. Es ist eine Erkenntnis der Erfindung, dass sich die im Vergleich zur Steckerbuchse gut sichtbare und im Vergleich zur Frontplatte einfach auswechselbare Sicherungsvorrichtung besonders gut für eine Farbkodierung eignet, dass es aber nicht notwendig ist, dass die ganze Sicherungsvorrichtung in mehreren Farben hergestellt wird. Stattdessen sind als eine Art Rastclips ausgebildete, hier für die Farbkodierung dienende Kodierungselemente 41 vorhanden, welche an der Sicherungsvorrichtung und am Steckergehäuse befestigbar sind. Dazu sind an der Sicherungsvorrichtung und am Steckergehäuse Raststellen 42 vorgesehen, welche mit Rastmitteln der Kodierungselemente zusammenwirken. Die Raststellen können bspw. an zwei gegenüberliegenden Wänden des Gehäuses 11 bzw. des Steckergehäuses 31 je eine leicht hervorstehende Rastkante 44 beinhalten. Die Rastmittel der Kodierungselemente besitzen ebenfalls Rastkanten 45, welche am unteren Ende von seitlich abgewinkelten Abschnitten 46 der Rastelemente nach innen ragen und mit den Rastkanten 44 des Gehäuses bzw. des Steckergehäuses zusammenwirken. Die Raststellen der Sicherungsvorrichtung und des Steckergehäuses sind vorzugsweise gleich ausgestaltet, so dass gleiche Kodierungselemente 41 aufgesteckt werden können.

Die Kodierungselemente sind bspw. als einfache Plastikteile ausgeformt und äusserst Kostengünstig in einer Vielzahl von Farben herstellbar. Ein Steckverbindersystem der erfindungsgemässen Art besitzt bspw. eine Vielzahl von verschiedenen Kodierungselementen.

Anstelle des gezeichneten Rastsystems gibt es auch andere denkbare Arten der Befestigung von Kodierungselementen an Sicherungsvorrichtung und Steckergehäuse. Beispielsweise kann dort eine transparente Platte vorhanden sein, unter welche das - in diesem Fall plättchenförmig und flach ausgestaltete - Kodierungselement geschoben werden kann.

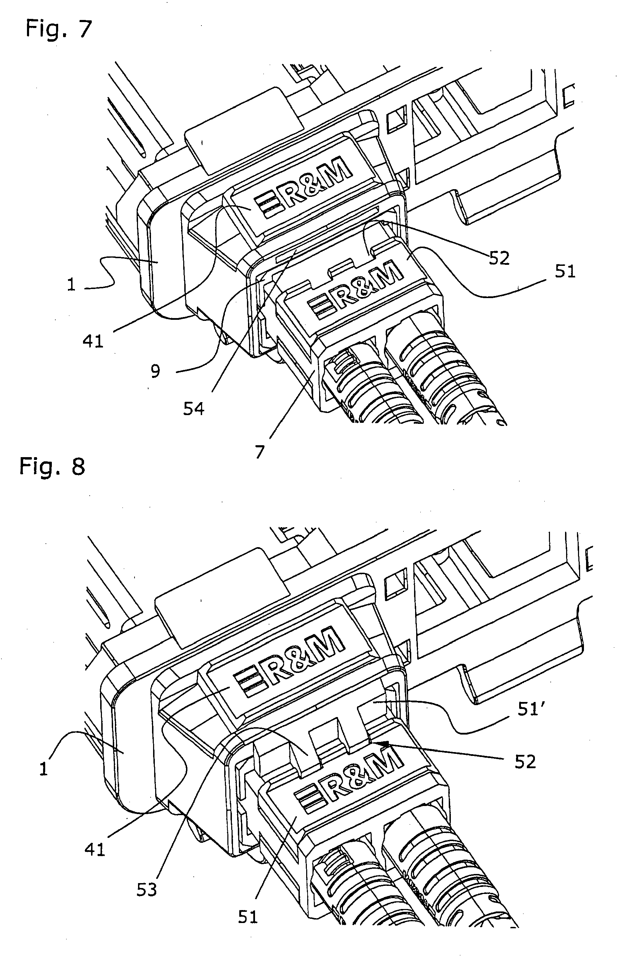

Es ist auch möglich, am Steckergehäuse und/oder an der Sicherungsvorrichtung befestigbare Kodierungselemente zu verwenden, welche gleichzeitig auch eine mechanische Kodierung bewirken können. Eine solche Lösung ist in den Figuren 7 und 8 skizziert. Dort sind ausschnittweise eine Frontplatte mit Buchse (verdeckt) eine Sicherungsvorrichtung 6, ein Zwischenteil 9 und ein eingeschobener Stecker gezeichnet. Auf die Sicherungsvorrichtung ist ein zur Farbkodierung dienendes Kodierungselement 41 der vorstehend beschriebenen Art aufgesetzt. Auf dem Steckergehäuse befindet sich ein Kodierungselement 51 mit Aussparungen 52 für die mechanische Kodierung. Selbstverständlich kann auch dieses Kodierungselement 51 für die Farbkodierung verwendet werden, eventuell zusätzlich zur Verwendung für die mechanische Kodierung. In der Ausführungsform gemäss Fig. 8 ist ein zweites Kodierungselement 51' mit einem kammartigen Vorsprung 53 bspw. mit einem Befestigungsschlitz 54 an der Sicherungsvorrichtung befestigt. Nur wenn die einzelnen den kammartigen Vorsprung 53 des zweiten Kodierungselementes 51' bildenden Finger in die Aussparungen des Kodierungselementes 51 passen, kann der Stecker eingesteckt werden. Ausgehend von der hier gezeichneten Ausführungsform sind auch andere Ansätze denkbar. Beispielsweise kann das Kodierungselement 51 abweichend von der gezeichneten Form sich entlang der Steckerachse weiter in Buchsenrichtung erstrecken und im eingerasteten Zustand mindestens teilweise ins Innere der Sicherungsvorrichtung hineinragen. Dann sind mechanische Strukturen des Zwischenteils 9 und/oder der Sicherungsvorrichtung, auf welche mechanische Strukturen des Kodierungselements abgestimmt sein müssen, beispielsweise Aussparungen kammartige Vorsprünge. Es ist auch möglich, ein auf der Oberseite an der Sicherungsvorrichtung anzubringendes Kodierungselement als mechanisches Kodierungselement auszugestalten. Es kann bspw. einen oder mehrere über die Kante der Sicherungsvorrichtung hinaus zum Steckergehäuse hin ragende Abschnitte aufweisen, welche angrenzend an das Steckergehäuse mechanische Strukturen aufweisen, die zu mechanischen Strukturen des Kodierungselementes passen müssen. Auf diese Weise kann sowohl die Farbkodierung als auch die mechanische Kodierung durch aufsetzbare bzw. aufclickbare Kodierungselemente erwirkt werden.

Die Erfindung kann abweichend von den vorstehend beschriebenen Ausführungsform in mancher Hinsicht abgeändert werden. Bspw. ist sie in der Anwendung keinesfalls auf optische Informationsübertragungssysteme oder gar auf SC-RJ-Steckverbinder beschränkt sondern kann auch für die anderen Steckverbindersysteme verwendet werden.

## Patentansprüche

1. Sicherungsvorrichtung (6) für eine Steckverbindung mit mindestens einer Steckbuchse und mindestens einem ein Steckergehäuse (31) aufweisenden Stecker (7), wobei die Sicherungsvorrichtung ein Gehäuse (11) aufweist, welches mit Befestigungsmitteln (12) vor der Steckbuchse befestigbar ist, und die Sicherungsvorrichtung im Innern des Gehäuses eine Riegelfeder (13) und ein Riegelelement (14) besitzt, welches so angeordnet ist, dass bei eingerastetem Stecker (7) ein Ziehen des Steckers durch Anstehen eines Anschlags eines vom Steckergehäuse (31) bezüglich einer Steckerachse lateral vorstehenden Elements (32) am Riegelelement verhindert wird, und dass das Gehäuse eine Öffnung (15) aufweist, in welche ein Werkzeug eingreifen und durch eine Auslenkung der Riegelfeder (13) entgegen einer Federkraft das Riegelelement (14) so verschieben kann, dass es einem Ziehen des Steckers nicht mehr entgegenwirkt, **dadurch gekennzeichnet, dass** die Öffnung (15) seitlich am Gehäuse angebracht ist, und dass die Riegelfeder durch eine Schwenkbewegung des Werkzeugs um eine zur Steckerachse senkrechte Schwenkachse auslenkbar ist.

2. Sicherungsvorrichtung nach Anspruch 1, **dadurch gekennzeichnet, dass** das Riegelelement (14) eine in Steckrichtung ansteigende Rampe (19) bildet, so dass beim Einschieben des Steckers (7) die Riegelfeder durch Druck vom lateral vorstehenden Element (32) auf die Rampenfläche des Riegelelementes ausgelenkt wird und bei vollständig eingeschobenem Stecker hinter dem lateral vorstehenden Element (32) einrastet.

3. Sicherungsvorrichtung nach einem der vorangehenden Ansprüche,
**dadurch gekennzeichnet, dass** die Form der Öffnung (15) das Einführen eines als das Werkzeug dienenden Schlüssels (10) mit einem Schlüsselbart (20) ermöglicht, welcher Schlüsselbart eine beim Auslenken der Riegelfeder (13) mit der Riegelfeder zusammenwirkende Oberfläche aufweist.

4. Sicherungsvorrichtung nach Anspruch 3, **dadurch gekennzeichnet, dass** die Riegelfeder einen J-förmig oder U-förmig abgebogenen Endabschnitt (18) besitzt, und dass der Schlüsselbart beim Auslenken mit dem Endabschnitt zusammenwirkt.

5. Sicherungsvorrichtung nach einem der vorangehenden Ansprüche,
**dadurch gekennzeichnet, dass** das vorstehende Element (32) ein Nocken ist, welcher bspw. gleichzeitig ein Kodiernocken des Steckers ist, welcher ein Einstecken des Steckers in die Buchse in einer falschen Orientierung verhindert.

6. Sicherungsvorrichtung nach einem der vorangehenden Ansprüche,
**dadurch gekennzeichnet, dass** am Gehäuse (11) steckerseitig ein den eingerasteten Stecker umgebender Kragen vorhanden ist, welcher eine gegen aussen vorstehende Ausbuchtung aufweist, so dass sich eine umlaufende Nut bildet, in welche Einrastmittel einer Schutzvorrichtung, welche das Stecksystem gegen von aussen einwirkende Feuchtigkeit oder Verschmutzung schützt.

7. Sicherungsvorrichtung nach einem der vorangehenden Ansprüche,
**dadurch gekennzeichnet, dass** sie zur Verwendung für ein 'Push-Pull'-Steckersystem speziell für die optische Datenübertragung, beispielsweise dem SC-RJ-Normsteckersystem, ausgebildet ist.

8. Steckverbindersystem, umfassend eine Sicherungsvorrichtung, nach einem der vorangehenden Ansprüche, wobei die Sicherungsvorrichtung ein Gehäuse aufweist, welches mit Befestigungsmitteln vor der Steckbuchse befestigbar ist, sowie einen Stecker mit Steckergehäuse und eine Buchse, wobei Stecker und Sicherungsvorrichtung je eine Befestigungsstelle besitzen, an welcher ein Kodierungselement (41) befestigbar ist, und wobei das Steckverbindersystem ferner mindestens ein Kodierungselement (41) aufweist.

9. Steckverbindersystem nach Anspruch 8, **dadurch gekennzeichnet, dass** die Befestigungsstellen Raststellen sind, und dass zwischen dem Steckergehäuse bzw. der Sicherungsvorrichtung einerseits und den Kodierungselementen (41) andererseits eine Rastverbindung herstellbar ist.

10. Steckverbindersystem nach Anspruch 9, **dadurch gekennzeichnet, dass** die Raststellen von Steckergehäuse (31) und Sicherungsvorrichtung (6) gleich ausgestaltet sind, in dem Sinn, dass die Kodierungselemente (41) sowohl auf die Raststelle (42) des Steckergehäuses als auch auf die Raststelle (42) der Sicherungsvorrichtung (6) aufrastbar sind.

11. Steckverbindersystem nach Anspruch 9 oder 10, **dadurch gekennzeichnet, dass** die Kodierungselemente (41) im Wesentlichen die Form eines Plättchens mit zwei seitlichen abgewinkelten Endabschnitten (46) aufweist, wobei die Endabschnitte je ein nach innen ragendes Rastmittel (45) besitzen.

12. Steckverbindersystem nach einem der Ansprüche 8 bis 11, **dadurch gekennzeichnet, dass** mindestens ein am Steckergehäuse zu befestigendes Kodierungselement (41) zusätzliche mechanische Strukturen für eine mechanische Kodierung aufweist.

## Claims

1. Securing apparatus (6) for a plug connection having at least one jack and at least one plug (7) which has a plug housing (31), wherein the securing apparatus has a housing (11) which can be fastened in front of the jack using fastening means (12), and the securing apparatus has an interlock spring (13) and an interlock element (14) in the interior of the housing, the said interlock element being arranged such that, when the plug (7) is latched in, pulling of the plug is prevented by a stop of an element (32), which projects laterally with respect to a plug axis from the plug housing (31), stopping against the interlock element, and that the housing has an opening (15) in which a tool can engage and, due to deflection of the interlock spring (13) counter to a spring force, can move the interlock element (14) such that it no longer acts counter to pulling of the plug, **characterized in that** the opening (15) is arranged on the side of the housing, and **in that** the interlock spring can be deflected by a pivoting movement of the tool about a pivot axis which is perpendicular to the plug axis.

2. Securing apparatus according to Claim 1, **characterized in that** the interlock element (14) forms a ramp (19) which rises in the plugging direction, such that, when the plug (7) is inserted, the interlock spring is deflected due to pressure from the laterally projecting element (32) onto the ramp surface of the interlock element and, when the plug is completely inserted, latches in behind the laterally projecting element (32).

3. Securing apparatus according to any of the preceding claims, **characterized in that** the shape of the opening (15) allows a key (10), which serves as the tool and has a key bit (20), to be inserted, the said key bit having a surface which interacts with the interlock spring when the interlock spring (13) is deflected.

4. Securing apparatus according to Claim 3, **characterized in that** the interlock spring has an end section (18) which is bent in a J-shape or a U-shape, and **in that** the key bit interacts with the end section in the event of deflection.

5. Securing apparatus according to one of the preceding claims, **characterized in that** the projecting element (32) is a cam which is, for example, at the same time a coding cam of the plug, which prevents the plug from being plugged into the socket with an incorrect orientation.

6. Securing apparatus according to one of the preceding claims, **characterized in that** a collar which surrounds the latched-in plug is present at the housing (11) on the plug side and has a bulge projecting toward the outside, so that a peripheral groove is formed, in which latching-in means of a protection apparatus which protects the plug system against moisture or soiling from the outside.

7. Securing apparatus according to one of the preceding claims, **characterized in that** it is designed to be used for a 'push-pull' plug system, specifically for optical data transmission, for example the SC-RJ standard plug system.

8. Plug connector system comprising a securing apparatus according to one of the preceding claims, wherein the securing apparatus has a housing which can be fastened in front of the jack using fastening means, and also comprising a plug having a plug housing, and a socket, wherein the plug and the securing apparatus each have a fastening point to which a coding element (41) can be fastened, and wherein the plug connector system further has at least one coding element (41).

9. Plug connector system according to Claim 8, **characterized in that** the fastening points are latching points, and **in that** a latching connection can be established between the plug housing or the securing apparatus on one hand and the coding elements (41) on the other.

10. Plug connector system according to Claim 9, **characterized in that** the latching points of the plug housing (31) and of the securing apparatus (6) are of identical design, meaning that the coding elements (41) can be latched onto the latching point (42) of the plug housing and also onto the latching point (42) of the securing apparatus (6).

11. Plug connector system according to Claim 9 or 10, **characterized in that** the coding elements (41) substantially has the shape of a plate with two lateral angled end sections (46), wherein the end sections each have an inwardly protruding latching means (45).

12. Plug connector system according to one of Claims 8 to 11, **characterized in that** at least one coding element (41) which is to be fastened to the plug housing has additional mechanical structures for mechanical coding.

## Revendications

1. Dispositif de sécurité (6) pour une connexion enfichable comprenant au moins une prise femelle et au moins une prise mâle (7) présentant un boîtier de prise mâle (31), le dispositif de sécurité présentant un boîtier (11) qui peut être fixé avec des moyens de fixation (12) devant la prise femelle et le dispositif de sécurité possédant à l'intérieur du boîtier un ressort de verrouillage (13) et un élément de verrouillage (14) qui est disposé de telle sorte que lorsque la prise mâle (7) est encliquetée, le retrait de la prise mâle est empêché par application contre l'élément de verrouillage d'une butée d'un élément (32) saillant latéralement, par rapport à un axe de prise mâle, depuis le boîtier de prise mâle (31), et de telle sorte que le boîtier présente une ouverture (15) dans laquelle un outil peut s'engager et peut déplacer l'élément de verrouillage (14) par déviation du ressort de verrouillage (13) contre une force de ressort de telle sorte qu'il ne s'oppose plus à un retrait de la prise mâle, **caractérisé en ce que** l'ouverture (15) est montée latéralement sur le boîtier, et **en ce que** le ressort de verrouillage peut être dévié par un mouvement de pivotement de l'outil autour d'un axe de pivotement qui est perpendiculaire à l'axe de prise mâle.

2. Dispositif de sécurité selon la revendication 1, **caractérisé en ce que** l'élément de verrouillage (14) forme une rampe (19) montant dans la direction d'enfichage, de sorte que lors de 1' insertion de la prise mâle (7), le ressort de verrouillage soit dévié par la pression de l'élément (32) saillant latéralement sur la surface de rampe de l'élément de verrouillage, et s'encliquète derrière l'élément (32) saillant latéralement, lorsque la prise mâle est complètement insérée.

3. Dispositif de sécurité selon l'une quelconque des revendications précédentes, **caractérisé en ce que** la forme de l'ouverture (15) permet l'insertion d'une clé (10) avec un panneton de clé (20) en tant qu'outil, lequel panneton de clé présente une surface coopérant avec le ressort de verrouillage lors de la déviation du ressort de verrouillage (13).

4. Dispositif de sécurité selon la revendication 3, **caractérisé en ce que** le ressort de verrouillage possède une portion d'extrémité (18) recourbée en forme de J ou de U, et **en ce que** le panneton de clé coopère avec la portion d'extrémité lors de la déviation.

5. Dispositif de sécurité selon l'une quelconque des revendications précédentes, **caractérisé en ce que** l'élément saillant (32) est une came, laquelle est par exemple simultanément une came de codage de la prise mâle, laquelle empêche une insertion de la prise mâle dans la prise femelle dans une mauvaise orientation.

6. Dispositif de sécurité selon l'une quelconque des revendications précédentes, **caractérisé en ce qu'**une manchette entourant la prise mâle encliquetée est prévue sur le boîtier (11) du côté de la prise mâle, laquelle manchette présente un renflement saillant vers l'extérieur de sorte qu'il se forme une rainure périphérique dans laquelle des moyens d'encliquetage d'un dispositif de protection qui protège le système de connecteur contre l'humidité ou les salissures agissant depuis l'extérieur.

7. Dispositif de sécurité selon l'une quelconque des revendications précédentes, **caractérisé en ce qu'**il est réalisé pour l'utilisation pour un système de connecteur de type "push-pull" spécialement pour le transfert de données optiques, par exemple pour un système de connecteur standard de type SC-RJ.

8. Système de connecteur enfichable, comprenant un dispositif de sécurité selon l'une quelconque des revendications précédentes, dans lequel le dispositif de sécurité présente un boîtier qui peut être fixé avec des moyens de fixation devant la prise femelle, comprenant aussi une prise mâle avec un boîtier de prise mâle et une prise femelle, la prise mâle et le dispositif de sécurité possédant chacun un point de fixation auquel un élément de codage (41) peut être fixé, et le système de connecteur enfichable présentant en outre au moins un élément de codage (41).

9. Système de connecteur enfichable selon la revendication 8, **caractérisé en ce que** les points de fixation sont des points d'encliquetage et **en ce qu'**entre le boîtier de prise mâle ou le dispositif de sécurité d'une part et les éléments de codage (41) d'autre part peut être établie une connexion par encliquetage.

10. Système de connecteur enfichable selon la revendication 9, **caractérisé en ce que** les points d'encliquetage du boîtier de prise mâle (31) et du dispositif de sécurité (6) sont configurés de manière identique **en ce que** les éléments de codage (41) peuvent être encliquetés à la fois sur le point d'encliquetage (42) du boîtier de prise mâle et sur le point d'encliquetage (42) du dispositif de sécurité (6).

11. Système de connecteur enfichable selon la revendication 9 ou 10, **caractérisé en ce que** les éléments de codage (41) présentent essentiellement la forme d'une plaquette avec deux portions d'extrémité (46) coudées latéralement, les portions d'extrémité possédant chacune un moyen d'encliquetage (45) faisant saillie vers l'intérieur.

12. Système de connecteur enfichable selon l'une quelconque des revendications 8 à 11, **caractérisé en ce qu'**au moins un élément de codage (41) prévu pour être fixé au boîtier de prise mâle présente des structures mécaniques supplémentaires pour un codage mécanique.
